# EUROPEAN PATENT SPECIFICATION

(11) **EP 1 197 411 B1**
(45) Date of publication and mention of the grant of the patent: **21.06.2006**
(21) Application number: 01308793.7
(22) Date of filing: 16.10.2001
(51) Int. Cl.: B60T 17/08

(54) **Brake actuator**
Bremsbetätigungsvorrichtung
Actionneur de frein

(30) Priority: 16.10.2000 US 690789
(43) Date of publication of application: 17.04.2002
(73) Proprietor: TSE Brakes, Inc., Fresno, CA 93725 (US)
(72) Inventor: Smith, Teddy D., Fresno, California 93725 (US); Smith, Greg, Fresno, California 93725 (US); Russell, Ralph D., Yuma, Arizona 85364 (US); Stubblefield, Michael D., Fresno, California 93725 (US)
(74) Representative: Morgan, David James

(56) References cited:
- US-A- 5 285 716
- US-A- 5 758 564
- US-A- 6 129 004
- US-A- 6 131 501

## Description

The present invention relates to a coupling for a brake actuator and to a brake actuator. Such brake actuators are used on heavy duty commercial vehicles, for example.

Various forms of pneumatic vehicle spring brake actuators have been introduced over the years primarily for use in the trucking industry. A typical actuator includes a service brake assembly that is used for slowing or stopping a vehicle, and may also include an emergency or parking brake assembly.

The service brake assembly is characterized by a closed housing which contains an elastomeric diaphragm sealingly attached to the sides of the housing, dividing the housing into two chambers. A first chamber is defined on one side of the diaphragm. A centrally located slidable push rod is provided in the first chamber and is operably associated with the diaphragm. The rod extends out of the service brake housing for attachment to the braking mechanism of the vehicle. A second sealed chamber is formed within the housing on the opposite side of the diaphragm. An opening is provided in the second chamber for connection to a pneumatic (air) pressure source usually provided by an on-board air compressor. The brakes of the vehicle can be applied by variably introducing sufficient pneumatic pressure into the sealed chamber to act against the diaphragm to move the push rod out. A small return spring is provided inside the service brake housing around the push rod to urge it to retract when the air pressure behind the diaphragm is reduced.

When employed, the emergency brake assembly is attached in axial alignment with the service brake assembly. The emergency brake is a separate closed housing which also contains a diaphragm sealingly attached to the sides of the housing dividing the housing into two chambers. A heavy compression spring is provided in the first chamber, and a slidable central rod is provided in the second sealed chamber for communication with the push rod of the service brake assembly. As with the service brake, the sealed chamber of the emergency brake is connected to the on-board pressurized air source of the vehicle. As long as sufficient air pressure is provided, the diaphragm in the emergency brake housing holds off the large compression spring. However, should pressure fall, or should there be a leak in the sealed chamber, the diaphragm will be unable to hold the large compression spring in place. When this occurs, either slowly or quickly, the large compression spring expands, causing the central rod to move the push rod out thereby applying the brakes of the vehicle. Under normal conditions, when the vehicle is parked, the air pressure to the emergency brake portion is cut off causing the large compression spring to apply the brakes.

Because the spring brake assembly is a critical safety system, it has to be designed and manufactured for exceptional reliability. Moreover, the compression spring inside the emergency brake actuator can be potentially dangerous. It must be capable of exerting a sufficient force to apply the brakes of the vehicle independent of any external air pressure or assistance from the service brake. This spring in its compressed state stores substantial kinetic energy which may be dangerous if the spring brake housing is opened without first taking adequate precautions to secure the spring in its compressed state or to release the stored energy in a controlled manner.

It is conventional to fabricate the emergency brake housing in two opposing sections: a cup or head for holding the large compression spring, and an adaptor for receiving the cup. The emergency brake cup and the corresponding adaptor each have an open central area and an annular peripheral edge. These peripheral edges are joined to form the emergency brake housing. At this peripheral junction, the peripheral edge of the elastomeric diaphragm is also attached. The two opposing sections are coupled together with sufficient force to maintain an air-tight seal between the diaphragm and the housing, dividing the housing into two chambers. The adaptor includes an inlet that allows for fluid communication between the second sealed chamber and the on-board pressurized air supply.

Similarly, it is also conventional to fabricate the service brake housing in two opposing sections: a cup or head, and an adaptor for receiving the cup. As with the emergency brake, each of these parts has an open central area and an annular peripheral edge joined to form the service brake housing, with the peripheral edge of the diaphragm sealingly attached between. The service brake housing is also divided into two chambers, and the adaptor also includes an inlet which allows for fluid communication between the second sealed chamber and the on-board pressurized air supply.

Similarly, it is also conventional to fabricate the service brake housing in two opposing sections: a cup or head, and an adaptor for receiving the cup. As with emergency brake, each of these parts has an open central area and an annular peripheral edge joined to form the service brake housing, wt the peripheral edge of the diaphragm sealingly attached between them. The service brake housing is also divided into two chambers, and the adaptor also includes an inlet which allows for fluid communication between the second sealed chamber and the on-board pressurized air supply.

In a tandem brake actuator which includes both an emergency brake assembly and a service brake assembly (sometimes called a double-diaphragm adaptor), a single adaptor piece is provided which has oppositely facing axially aligned receptacles for attachment to, respectively, the emergency brake housing cup and the service brake housing cup. Normal positioning of the two elastomeric diaphragms results in the adaptor being part of the sealed chambers of both the service brake and the emergency brake. As a result, it is common for a tandem adaptor to have an hourglass shape and to include the openings into each chamber for attachment to the on-board air supply for the brakes.

It will be appreciated that each adaptor (whether emergency brake adaptor, spring brake adaptor, or tandem adaptor) requires numerous critically angled walls together with a specially positioned inlet opening for attachment to the on-board air supply. Because of its hourglass shape, making a tandem adaptor from steel requires the welding together of two halves. There is great expense involved in creating the necessary tooling to make these two halves, providing inlet openings on each of them, and then attaching them together. As a result, it is more common for adaptor parts to be made from cast aluminium. Not only does the price of aluminium make it an attractive alternative to steel, using cast aluminium also makes it possible to easily establish the critical angles and inlet openings of the adaptor in the mold, thereby avoiding the need for expensive fabrication and tooling. Making adaptors from aluminium is also desirable for a brake manufacturer or remanufacturer to be able to use its conventional existing aluminium molds to inexpensively create adaptor pieces that may be attached to existing housing cups. Casting the adaptor pieces from aluminium is also desirable in that, compared to steel, many different molds may be easily and inexpensively created for the various sized pieces.

Because they have a more simple design, it is also common for emergency brake and service brake housing cups to be made of steel. However, for the same reasons described above, it may be equally advantageous to make these housing cups from aluminium. Thus, depending upon the situation, it may be desirable to make either the adaptor or the housing cup from aluminium, and to make the corresponding piece from the other metal. However, it is difficult to join together such parts when made from dissimilar metals, presenting the continuing problems of assuring that the coupling be air tight as well as safe and secure.

Since unauthorized opening of the emergency brake housing is potentially dangerous to the inexperienced mechanic, and since unauthorized re-sealing using defective seals or improper procedures could result in a poor diaphragm seal or other internal defect, it is also conventional to discourage unauthorized access, disassembly, and reassembly of the emergency brake housing by appending a warning label to the housing and using an attachment means which is temper-resistant or at least tamper-evident, so that a new attachment means, not readily available to unauthorized personnel, is required before the housing can be reassembled. Conventional clamping means also involve additional expense.

Because of the danger presented by the compression of the large spring of these brake systems, numerous inventions have been patented which provide different ways of improving safety. Many of these inventions are directed towards securing the assembly of the two halves of the housing between which the diaphragm is deployed.

The below-listed United States and foreign patents are known to exist:

| No. | Patent No. | Date | Inventor |
|---|---|---|---|
| 1 | 2,541,205 | February 13, 1951 | Christophersen |
| 2 | 3,101,133 | August 20, 1963 | House |
| 3 | 3,696,711 | December 16, 1975 | Kurichh, et al |
| 4 | 3,926,094 | October 10, 1972 | Berg, et al |
| 5 | 7308049.6 | 1973 | Bosch (German) |
| 6 | 028074 | June 27, 1978 | Girling (G.B.) |
| 7 | 4,850,263 | July 25, 1989 | Rumsey |
| 8 | 4,960,036 | October 2, 1990 | Gummer |
| 9 | 5,062,455 | November 5, 1991 | Schurter |
| 10 | 5,067,391 | November 26, 1991 | Choinski |
| 11 | 5,193,432 | March 16, 1993 | Smith |
| 12 | 5,205,205 | April 27, 1993 | Choinski |
| 13 | 5,285,716 | February 15, 1994 | Thompson |
| 14 | 5,315,918 | May 31, 1994 | Pierce |
| 15 | 5,353,688 | October 11, 1994 | Pierce |
| 16 | 5,676,036 | October 14, 1997 | Choinski |
| 17 | 5,771,774 | June 30, 1998 | Stojic |
| 18 | 6,012,378 | January 11, 2000 | Hicks |

These patents disclose different methods and apparatus for attachment of the two halves (cups) of a brake housing. Annular clamps are taught in U.S. Patent Nos. 2,541,205 to Christophersen; 4,960,036 to Gummer, et al; and 5,193,432 to Smith. Such clamps are bulky and cumbersome in that the flanges, nuts and bolts used for connection may not easily fit into the cramped brake area of a vehicle. They also add additional expense to the overall cost of the unit.

Various ways of crimping or bending the edge flanges of the two housing cups are taught in U.S. Patent No. 3,101,133 to House; a German Patent Application No. G 73 08 049.6 filed by Bosch; and U.S. Patent No. 4,850,263 to Rumsey. The Rumsey patent utilizes overlapping lips where one is spinned over the other and bent into position by use of the lathe or other suitable machine. Each of these devices is limited to the use of a strong bendable metal such as steel.

The four U.S. Patents to Gummer and Choinski (Nos. 4,960,036; 5,067,391; 5,205,205 and 5,676,036) each disclose use of a clamp ring, use of a metal spun annular crimp of a flange on one of the housing cups, and the use of a separate circular channel clamp for attachment of the housing cups. Clamp rings are bulky and dangerous as noted above; and, although the circular channel clamp is a more permanent structure, it, as well as the metal spun flanges, is limited to use with steel. Moreover, there is a significant cost associated with providing a separate circular channel clamp. This cost is particularly high because of the circular design of the clamp that results in a large amount of scrap being left over after the clamp is fabricated.

The use of a snap ring for attachment is shown in U.S. Patent No. 5,353,688 to Pierce, et al, and in U.K. Patent No. GB 2,000,225A to Girling Midland, etc. U.S. Patent No. 5,315,918 to Pierce discloses several methods of attachment including bayonet, screw thread, slot plus pins, and welds. Each of these methods of attachment requires that the cup and/or adaptor be uniquely modified in order to hold or accept such things as the snap ring, the pins, the screw threads, the slots, etc. Such adaptations render the cup and adaptor parts unusable except with correspondingly adapted parts, thereby severely limiting overall use, especially for repair and reuse. In addition, spot welds near the diaphragm may cause damage to the diaphragm thereby affecting the security of the airtight seal.

The welding together of two halves of like material is shown in U.S. Patent Nos. 5,062,455 to Schurter and U.S. Patent No. 5,285,716 to Thompson.

US 6,129,004 discloses a brake actuator comprising a) a cylindrical adaptor having an annular shoulder and an axially protruding annular flange; b) a flexible diaphragm stretched across said adaptor on said shoulder; c) a brake housing cup having a first annular lip at its edge provided over said diaphragm at said shoulder adjacent to said annular flange, a second annular lip provided on said housing in close proximity to the first annular lip such that said annular retaining piece fits between said lips; d) an annular retaining piece provided over said lip and on the inside of said flange; and e) at least one weld connecting said retaining piece to said annular flange, for holding the lip of aid housing securely against said adaptor.

A significant problem presented by the use of annular clamps and the like to join brake housing cups made of dissimilar metals is that the ears, nuts and bolts of such clamps create significant clearance problems in the close tolerances of the brake area of a vehicle, making such methods of attachment unattractive. With the ever changing designs for commercial vehicle brakes, the available space for brake actuators is diminishing while the demand for ever stronger emergency brake actuators has increased. Increasing load sizes, new regulation and other factors have created a need for additional power in a spring brake with the same dimensional profile as existing tandem (double-diaphragm) spring brakes.

A stronger spring brake that takes up the same or a smaller space can result in great savings in the transportation industry. Under present regulations, a loaded truck must be able to apply its brakes and holds its position on a twenty percent (20%) grade. For many heavy vehicles, in order to accomplish this requires additional brake actuators and/or additional axles with brake actuators on them. With stronger brake actuators, fewer of them are needed to bring or hold such a vehicle at rest, thereby saving the cost of the additional brake actuators and/or additional axles.

There is also a need for a more powerful spring brake that fits into a smaller space. This need is driven by such factors as the installation of vehicle air suspensions, lowered floor heights, shorter wheel bases, and the addition of new and bulky chassis equipment. All of these factors result in competition for the same space (profile) occupied by the spring brake actuator.

A spring brake assembly of smaller size that provides the same power as a larger assembly will also reduce weight and cost. A typical truck tractor and semi trailer may use 8 spring brake actuators on its axles. Replacing these with smaller units having the same strength that are two pounds lighter will reduce the weight by 16 pounds. While this may not seem significant at first blush, a liquid hauling vehicle is frequently loaded to the exact legal limit. Over the life of that vehicle, the 16 pound reduction will convert to thousands of dollars of hauling revenue.

US 5,758,564 discloses a coupling for a brake actuator comprising: a) an enclosed housing including a housing cup and an adaptor, said housing cup having an open end that includes a substantially vertical cylindrical wall, said adaptor having an open annular end corresponding to the open end of said housing cup; b) an engagement structure on the open end of said adaptor comprising a first outwardly facing annular ridge at the outermost annular edge of said adaptor, a second outwardly facing annular ridge in axial alignment with said first ridge and separated from said first ridge by a first annular groove.

In one aspect the invention provides a coupling for a brake actuator as in the above summary of US 5,758,564, characterised by a third outwardly facing annular ridge in said engagement structure in axial alignment with said second annular ridge and separated from said second annular ridge by a second annular groove ;
c) an annular retaining piece provided in said second annular groove; and
d) at least one weld connecting said annular retaining piece to the cylindrical wall of said housing cup for holding said housing cup securely against said adaptor.

Preferred features are defined in claims 2 to 9.

In one embodiment in accordance with claim 2, the slightly enlarged annular peripheral edge of the elastomeric diaphragm fits over the upper edge of the adaptor, over the first (outermost) ridge, and into the first annular groove, the first ridge and groove holding the slightly enlarged peripheral edge in place. A discontinuous annular steel retaining piece is fitted into the second groove. This retaining piece has at least one break or opening therein to allow it to be opened for fitment into the second groove. The substantially vertical cylindrical wall of the housing cup is snugly fitted over the first two ridges of the adaptor such that the wall compresses the annular peripheral edge against the first ridge of the adaptor, the wall also coming into firm contact with both the second ridge of the adaptor and the annular steel retaining piece.

It is not feasible to securely weld the dissimilar metals of the housing cup and the adaptor together; however it is possible to weld steel to steel. Accordingly, in this preferred embodiment, the lower edge of the annular cylindrical steel wall is welded to the annular steel retaining piece to secure it in place. The retaining piece may have a single break therein, or multiple breaks resulting in multiple pieces. One or more welds are used to join the annular steel piece(s) to the annular cylindrical wall of the housing cup, thereby coupling the steel housing cup to the aluminium adaptor and creating a sealed chamber inside the adaptor. The weld may be continuous or in parts around the diameter.

The attachment of the edges of the diaphragm over the top edge of the adaptor results in an advantageous positioning of the diaphragm. Instead of extending towards the center of the housing at an angle perpendicular to the cylindrical wall of the housing cup, the edges of the diaphragm have a substantially vertical angle that corresponds closely to the cylindrical wall. This angle, in conjunction with the steep vertical angle of the cylindrical housing wall itself, makes it possible for more of the surface area of the diaphragm to be available to impart pressure to a plate that holds off the large compression spring. In particular, a pressure plate having a larger surface area may be used, all of which area makes contact with the adjacent diaphragm as it expands. The steeper initial angle of the periphery of the diaphragm results in less drop off at the shoulder where the diaphragm makes critical contact with the pressure plate. The more of the expanded diaphragm which contacts the pressure plate, the less air pressure required to hold off the large compression spring; the same air pressure supplied to such a larger plate or member imparts greater force to hold off this spring.

In another embodiment, of the invention, the adaptor is made of steel and the housing cups are made of cast aluminium. In this aspect, the outwardly facing annular ridges are provided on the aluminium housing cup(s), and the steel adaptor has a substantially vertical cylindrical side wall. The coupling in this aspect is inverted from the coupling of the first aspect. Otherwise, the parts and function of the coupling are the same, with the exception that there is no advantageous angle of the peripheral member.

In a third embodiment all parts are made of steel. In this embodiment, the outwardly facing annular ridges may be provided on the adaptor with the housing cup having a substantially vertical cylindrical side wall; or the outwardly facing annular ridges may be provided on the housing cup with the adaptor having a substantially vertical cylindrical side wall.

In each embodiment, it is important to obtain a secure seal where the edge of the elastomeric diaphragm meets the adaptor. In order to prevent heat from the welding process from damaging this peripheral edge, the coupling is preferably designed such that the weld(s) between the retaining piece and the cylindrical wall are physically distant from the edge of the diaphragm.

In addition, the welded retaining piece may be later removed without damage to the aluminium part (whether housing cup or adaptor), allowing for the aluminium part to be recycled for use in a remanufactured brake actuator.

In another aspect the invention provides an emergency brake actuator as defined in claim 10.

In another aspect the invention provides a service brake actuator as defined in claim 11.

In another aspect the invention provides a tandem brake actuator as defined in claim 12.

Preferred embodiments of the invention are described below by way of example only with reference to Figures 1 to 7 of the accompanying drawings wherein:
Fig. 1 is a cross sectional side view of a tandem air brake actuator incorporating one coupling in accordance with the present invention in both the service and emergency brake assemblies.
Fig. 1A is an enlarged sectional side view of the above coupling shown in the emergency brake assembly of Fig. 1.
Fig. 2 is a partially cut away side view of the service brake assembly of a tandem brake actuator showing detail of the above coupling.
Fig. 2A is a side elevational view of an adaptor incorporating the above coupling on both the service and emergency brake sides.
Fig. 3 is an exploded view showing the parts of a tandem service brake and emergency brake actuator employing the above coupling.
Fig. 4 is a side view showing an assembled tandem service brake and emergency brake actuator employing the above coupling.
Fig. 5 is a side view of a stand alone service brake assembly using the above coupling.
Fig. 6 is a top perspective view of an annular steel member showing a single opening therein.
Fig. 7 is a top perspective view of an annular steel member showing multiple openings therein.

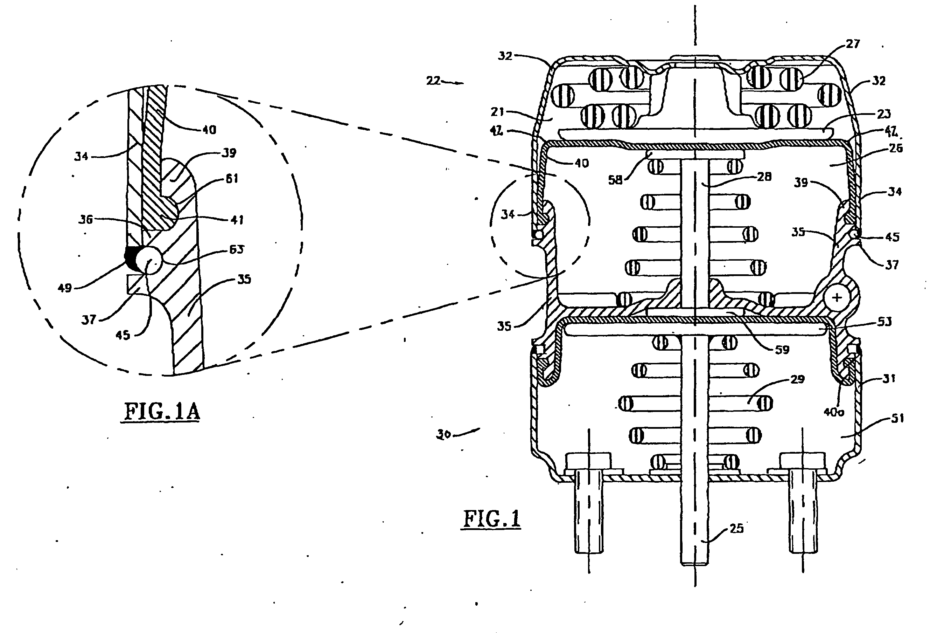

Referring to the drawings wherein like reference characters designate like or corresponding parts throughout the several views, and referring particularly to Figs. 1 and 1A it is seen that a tandem spring brake actuator includes an emergency brake assembly, generally 22, attached in axial alignment with a service brake assembly, generally 30. The interior of the emergency brake assembly 22 is defined by an open-ended housing cup 32, which is joined at its annular perimeter to an open-ended adaptor 35. An elastomeric diaphragm 40 is sealingly attached at the peripheral junction between the housing cup 32 and the adaptor 35 thereby dividing the emergency brake assembly 22 into two chambers 21 and 26. A large compression spring 27 is deployed in the first chamber 21. A pressure plate 23 is also provided in the first chamber between compression spring 27 and diaphragm 40 as shown in Fig. 1.

The second chamber 26 of the emergency brake assembly 22 is provided on the opposite side of diaphragm 40. Chamber 26 is sealed and has an opening 24 for connection to an on-board pressurized air supply. Introduction of pressurized air through opening 24 into chamber 26 expands diaphragm 40 which moves pressure plate 23 thereby compressing (holding off) compression spring 27. This position is shown in Fig. 1. A slidable force transfer rod 28 is provided in chamber 26 for transferring force from spring 27 out of the emergency brake 22. Removal of pressurized air from chamber 26 allows compression spring 27 to expand, thereby pushing pressure plate 23 against diaphragm 40, intermediate adaptor push plate 58 and actuator rod 28, extending rod 28 into the service brake assembly 30.

The interior of the service brake assembly 30 is defined by an open-ended housing cup 31 that is joined at its annular perimeter to an open-ended adaptor 35. A second elastomeric diaphragm 40a is sealingly attached at the peripheral junction between the housing cup 31 and the adaptor 35 thereby dividing the service brake assembly into two chambers 51 and 54. A push rod 25 is deployed in the first chamber 51. A pressure plate 53 is also provided in the first chamber between push rod 25 and diaphragm 40a as shown in Fig. 1.

A second chamber 54 is provided in the service brake assembly 30 on the opposite side of diaphragm 40a. Chamber 54 is sealed and has an opening 24 for connection to an on-board pressurized air supply. Introduction of pressurized air through opening 24 into chamber 54 expands diaphragm 40a thereby transferring force to pressure plate 53 and push rod 25, extending rod 25 out of chamber 51 to activate the brakes of the vehicle. Pressurized air is variably introduced and removed from chamber 54 in response to the operation of the brake pedal of he vehicle. This causes diaphragm 40a to expand and contract, thereby moving actuator rod 25 in and out to apply or release the brakes of the vehicle as it is being operated. Upon withdrawal of air pressure to chamber 54, return spring 29 causes push rod 25 to be retracted back into the service brake housing.

In contrast, upon the withdrawal of air pressure from chamber 26 of the emergency brake assembly, spring 27 pushes rod 28 into the service brake assembly as described previously. As push rod 28 moves into chamber 54, it presses plate 59 against diaphragm 40a which pushes plate 53 against rod 25, extended rod 25 out of the service brake 30 to apply the brakes of the vehicle. This ordinarily occurs when the vehicle is parked: pressure is withdrawn from emergency chamber 26 and heavy spring 27 expands causing the bakes to be applied. This may also occur in an emergency situation where there is a failure in the air pressure system: the absence of pressure in chamber 26 allows heavy spring 27 to expand and apply the brakes of the vehicle.

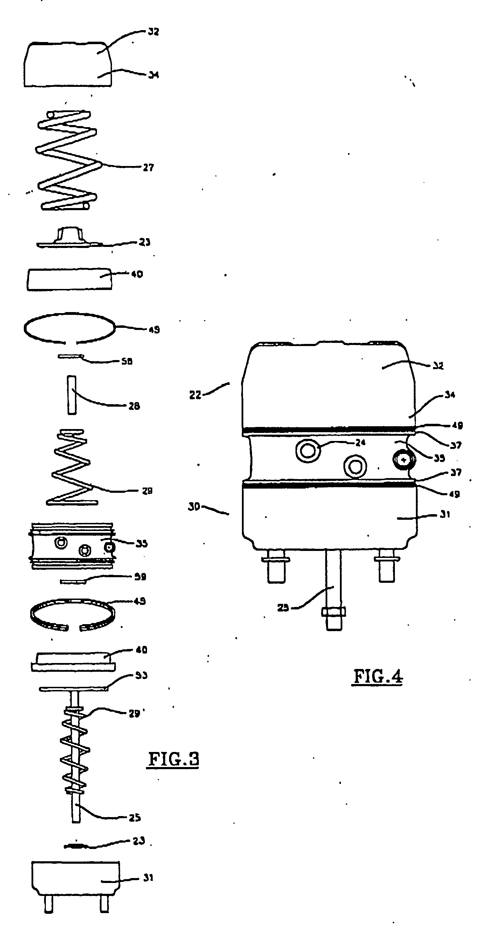

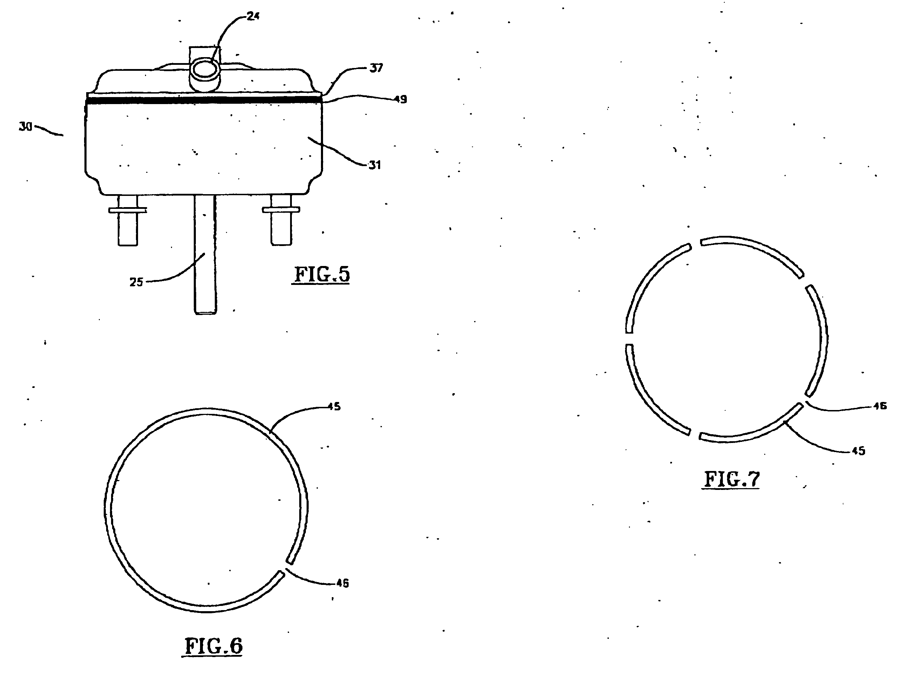

Turning to Figs. 1, 4 and 5 it is seen that the coupling of the present invention may be provided to join an emergency brake housing cup 32 to an adaptor 35 (as shown in Fig. 1), to join a service brake housing cup 31 to an adaptor 35 (as shown in Fig. 5), or to join both the emergency and service brake housing cups 31 and 32 to an adaptor 35 (as shown in Fig. 4).

Referring to the detail of the emergency brake assembly shown in Fig. 1A, it is seen that the coupling of the present invention calls for the open end of steel housing cup 32 to have a substantially vertical cylindrical wall 34. An engagement structure corresponding to wall 34 is provided on the open end of aluminium adaptor 35. This engagement structure includes three distinct outwardly facing annular ridges. The first ridge 39 is provided at the outermost annular edge of adaptor 35. A secondly outwardly facing annular ridge 36 is provided in axial alignment with ridge 39 and separated therefrom, thereby defining a groove 61 between ridges 39 and 36. A third outwardly facing annular ridge 37 is provided in axial alignment with ridge 36 and separated therefrom, thereby defining a second groove 63 between ridges 36 and 37. The first ridge 39 is axially recessed from the second, central ridge 36 which, in turn, is axially recessed from lower ridge 37. The outside diameter of central ridge 36 is the same as the inside diameter of housing cup wall 34.

A discontinuous annular retaining piece 45 is provided which fits into the second groove 63 of adaptor 35. At least one brake or opening is provided in retaining piece 45 in order to allow it to be opened for fitment into groove 63. Retaining piece 45 may be provided in a plurality of smaller pieces, each of which fits into a section of groove 63. The cross sectional shape of groove 63 and corresponding retaining piece 45 may be of various shapes (round, square, rectangular, flat, hexagonal, semi-circular, L-shaped, etc.) depending upon the application.

The annular outside edge of elastomeric diaphragm 40 is provided with an annular ridge (lip) or bulge 41 having a thicker cross-section than the remainder of the diaphragm 40.

Diaphragm 40 is designed to be stretched over ridge 39 of adaptor 35 such that the lip or ridge 41 of diaphragm 40 fits in to the first groove 61 of adaptor 35.

The coupling of the present embodiment is made by first stretching elastomeric diaphragm 40 over adaptor 35 such that ridge 41 of diaphragm 40 fits into the first groove 61. Retaining piece(s) 45 is (are) placed in the second groove 63 of adaptor 35. Then, the cylindrical wall 34 of housing cup 32 is fitted over adaptor 35 such that diaphragm 40 is squeezed between wall 34 and ridge 39. The lower peripheral edge of wall 34 is pushed against adaptor 35 such that the inside of wall 34 mates snugly with the second ridge 36 of adaptor 35, the lower peripheral edge of wall 34 touching retaining piece(s) 45. One or more welds are then employed to attach retaining piece(s) 45 to wall 34.

It is to be appreciated that the emergency brake coupling shown in Fig. 1 may be inverted such that the housing cup 32 may be made of cast aluminium and include ridges 37, 36 and 39 and grooves 61 and 63; and that adaptor 35 may be made of steel and have the substantially vertical cylindrical wall 34 which is welded to retaining piece(s) 45.

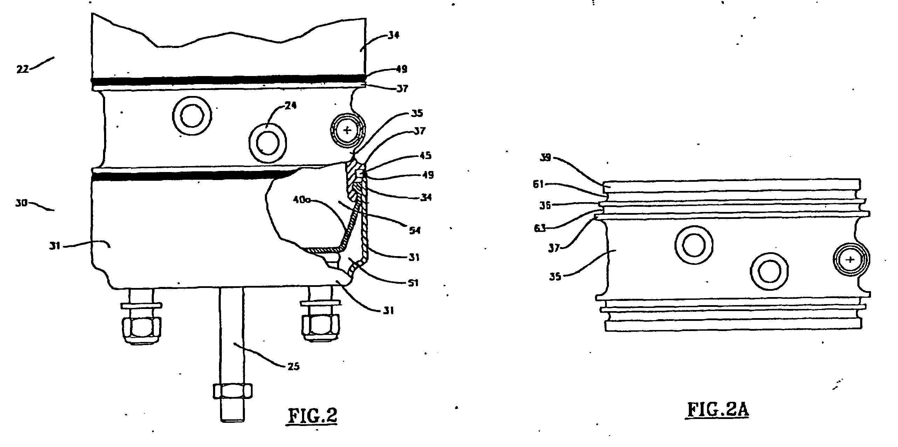

Referring to the detail of the service brake assembly 30 shown in Fig. 2, it is seen that the coupling of the present embodiment may also be used to couple the service brake housing cup 31 to adaptor 35 in a fashion that is substantially identical, although inverted, from the emergency brake assembly. The open end of steel housing cup 31 of the service brake assembly is provided with a substantially vertical cylindrical wall 34. An engagement structure corresponding to wall 34 is provided on the open end of aluminium adaptor 35. As on the emergency side, this engagement structure includes three distinct outwardly facing annular ridges. The first ridge 39 is provided at the outermost annular edge of adaptor 35. A second outwardly facing annular ridge 36 is provided in axial alignment with ridge 39 and separated therefrom, thereby defining a groove 61 between ridges 39 and 36. A third outwardly facing annular ridge 37 is provided in axial alignment with ridge 36 and separated therefrom, thereby defining a second groove 63 between ridges 36 and 37. The first ridge 39 is axially recessed from the second, central ridge 36 which, in turn, is axially recessed from lower ridge 37. The outside diameter of central ridge 36 is the same as the inside diameter of housing cup wall 34.

As on the emergency side, a discontinuous annular retaining piece 45 is provided which fits into the second groove 63 of adaptor 35. At least one brake or opening is provided in retaining piece 45 in order to allow it to be opened for fitment into groove 63. Retaining piece 45 may be provided in a plurality of smaller pieces, each of which fits into a section of groove 63. The cross sectional shape of groove 63 and corresponding retaining piece 45 may be of various shapes (round, square, rectangular, flat, hexagonal, semi-circular, L-shaped, etc.) depending upon the application.

The annular outside edge of elastomeric diaphragm 40a is provided with an annular ridge (lip) or bulge 41a having a thicker cross-section than the remainder of the diaphragm 40a. Diaphragm 40a is designed to be stretched over ridge 39 of adaptor 35 such that the ridge or lip 41a of diaphragm 40a fits into the first groove 61 of adaptor 35.

The coupling on the service side is accomplished in the same fashion as on the emergency side, by first stretching elastomeric diaphragm 40a over adaptor 35 such that lip 41a of diaphragm 40a fits into the first groove 61. Retaining piece(s) 45 is (are) placed in the second groove 63 of adaptor 35. Then, the cylindrical wall 34 of housing cup 31 is fitted over adaptor 35 such that diaphragm 40a is squeezed between wall 34 and ridge 39. The lower peripheral edge of wall 34 is pushed against adaptor 35 such that the inside of wall 34 mates snugly with the second ridge 36 of adaptor 35, the lower peripheral edge of wall 34 touching retaining piece(s) 45. One or more welds are then employed to attach retaining piece(s) 45 to wall 34

It is to be appreciated that the service brake coupling shown in Fig. 2 may be inverted such that the housing cup 31 may be made of cast aluminium and include ridges 37, 36 and 39 and grooves 61 and 63; and that adaptor 35 may be made of steel and have the substantially vertical cylindrical wall 34 which is welded to retaining piece(s) 45.

Because diaphragm 40 of the emergency brake assembly (or diaphragm 40a of the service brake assembly) is stretched over the outside edge of adaptor 35 such that bulge 41 (or 41a) fits into groove 61, it extends away from adaptor ridge 39 beginning at a substantially vertical angle. When chamber 26 of the emergency brake assembly (or chamber 54 of the service brake assembly) is fully inflated and diaphragm 40 (or 40a) is fully extended, the substantially vertical angle of diaphragm 40 (or 40a) along the inside of wall 34 results in a much smaller gap between the inside edge of wall 34 and shoulder 42 of diaphragm 40 (or 40a). This smaller gap makes more surface area of diaphragm 40 (or 40a) available to press against pressure plate 23 of the emergency brake assembly (or plate 53 of the service brake assembly). Thus, a larger pressure plate 23 (or 53) may be efficiently employed. The increased usable surface area of plate 23 (or 53) for receiving pressure from diaphragm 40 (or 40a) results in a much more efficient brake actuator.

On the emergency side, the larger usable surface area on plate 23 means that less air pressure is required to hold off the large compression spring 27; alternatively, applying the same air pressure on the larger usable surface area allows the unit to hold off a stronger spring 27. A stronger spring 27 is capable of applying more force to the brakes of the vehicle. Similarly, on the service side, the large usable surface area on plate 53 means that less air pressure is required to apply the brakes of the vehicle when in operation; alternatively, applying the same air pressure on the larger usable surface area of plate 53 allows the unit to apply more force to the brakes. One of the most important aspects of the coupling of the present invention is that it does not increase and may actually decrease the overall exterior profile of the brake actuator unit (i.e. neither the emergency nor service brake assemblies are any larger in size). Thus, the coupling of the present invention allows for a brake actuator unit of the same or smaller size to be considerably stronger and able to apply more force to the brakes of a vehicle.

In the preferred embodiment, the housing cups 31,32 are made of steel and the adaptor 35 is made of aluminium and cast in an appropriate mold. However, the present invention works equally well if all parts are made of steel, or if the adaptor 35 is made of steel and the housing cups 31, 32 made of aluminium. Tooling for aluminium parts (whether housing cups or adaptor) is far less expensive than forming the same part from a steel sheet.

Openings 24 for attachment of each chamber to the pneumatic source are provided in the adaptor 35. The inside diameter of lower housing cup wall 34 should be essentially the same as the outside diameter of annular ridge 36 for snug metal-to-metal fitment. The diameter of ridge 39 should be slightly smaller than that of ridge 36 in order to allow diaphragm 40 (or 40a) to fit between ridge 39 and housing wall 34.

Annular retaining piece 45 should have a diameter that is approximately the same as groove 63. Piece 45 should have at least one opening therein to allow it to be easily placed over ridge 36 and into groove 63. However, retaining piece 45 may have more than one opening therein resulting in a plurality of discontinuous pieces 45 which may be placed in groove 63, each such piece being separately welded to wall 34. In the preferred embodiment shown in Fig. 1, an annular weld (that is discontinuous only at the break(s) 46 in piece 45) between 45 and wall 34 is preferred for maximum attachment security.

Several alternative embodiments of the apparatus are also available. The upper lip of ridge 39 can have a configuration that is angled, grooved, drilled, chamfered, machined or as cast. Retaining piece 45 may be formed, cast, stamped, rolled, punched or machined and may be formed in one of several different configurations having different cross sectional shapes such as: circular, semicircular, rectangular, square, strip or polysided. When such alternative configurations are used, groove 63 is formed to correspond to the cross-sectional shape of retaining piece 45. Piece 45 may be made from ferrous or non-ferrous material, and may have at least one brake therein to facilitate placing it over the adaptor base. Piece 45 should have a diameter roughly the same as groove 63 such that it fits snugly therein with good metal-to metal contact.

It is to be understood that variations and modifications of the preferred embodiments may be made without departing from the scope of the invention. It is also to be understood that the present invention is not to be limited by the specific embodiments disclosed herein, but only in accordance with the appended claims when read in light of the foregoing specification.

## Claims

1. A coupling for a brake actuator comprising:
a) an enclosed housing including a housing cup (32/31) and an adaptor (35), said housing cup having an open end that includes a substantially vertical cylindrical wall (34), said adaptor having an open annular end corresponding to the open end of said housing cup;
b) an engagement structure on the open end of said adaptor comprising a first outwardly facing annular ridge (39) at the outermost annular edge of said adaptor, a second outwardly facing annular ridge (36) in axial alignment with said first ridge and separated from said first ridge by a first annular groove (61) **characterised by** a third outwardly facing annular ridge (37) in said engagement structure in axial alignment with said second annular ridge (36) and separated from said second annular ridge by a second annular groove (63);
c) an annular retaining piece (45) provided in said second annular groove; and
d) at least one weld(49) connecting said annular retaining piece to the cylindrical wall (34) of said housing cup (32/31) for holding said housing cup securely against said adaptor (35).

2. A coupling according to claim 1 wherein an elastomeric diaphragm (40/40a) is provided over the open end of the first ridge of said adaptor (35) and stretched across said adaptor dividing the interior of said brake actuator into a first chamber (21/51) and a second chamber (26/54), said diaphragm having an enlarged annular peripheral lip (41/41a) in engagement with said first groove (61).

3. A coupling according to claim 2 wherein said second ridge (36) is axially recessed from said third ridge (37), and said first ridge (39) is axially recessed from said second ridge (36).

4. A coupling according to claim 3 wherein the outside diameter of said second ridge (36) is the same as the inside diameter of said cylindrical housing cup wall (34).

5. A coupling according to claim 2 wherein the peripheral edge of said diaphragm (40/40a) adjacent to said lip (41) extends away from said first ridge at a substantially vertical angle when said diaphragm is expanded.

6. A coupling according to claim 5 wherein an increased surface area of said diaphragm (40/40a) is available to make direct contact with a pressure imparting plate (23/53) inside said actuator.

7. A coupling according to claim 1 or claim 2 wherein said housing cup (32/31) is made of steel, said adaptor (35) is made of aluminium, and said retaining piece (45) is made of ferrous metal.

8. A coupling according to claim 1 or claim 2 wherein said retaining piece (45) is discontinuous.

9. A coupling according to claim 1 or claim 2 wherein said retaining piece (45) has a cross section selected from the group consisting of circular, semi-circular, square, rectangular, oval, L-shaped, hexagonal and octagonal.

10. An emergency brake actuator for a vehicle comprising a coupling as claimed in any of claims 2 to 6 or any of claims 7, 8 and 9 as dependent on claim 2 further comprising:
a) a movable plate member (23) in the first chamber (21) movable with the diaphragm (40);
b) an actuator rod (28) in the first chamber operably associated with said moveable plate member for operation of a brake; and
c) a compression spring (29) disposed in the second chamber (26/54) in a position to urge the diaphragm to a first position wherein the first chamber is collapsed upon exhaust of pressurized fluid from the first chamber, wherein said elastomeric diaphragm (40) is reciprocally movable in said housing in response to the delivery and exhaust of pressurised fluid to and from the first chamber (21).

11. A service brake actuator for a vehicle comprising a coupling as claimed in any of claims 2 to 6 or any of claims 7,8 and 9 as dependent on claim 2 further comprising:
a) a movable plate member (53) in the first chamber (51) movable with the diaphragm (40a);
b) an actuator rod (25) in the first chamber operably associated with said movable plate member for operation of a brake; and
c) a return spring (29) disposed in the first chamber (51) in a position to urge the diaphragm (40a) to a first position wherein the first chamber is collapsed upon exhaust of pressurized fluid from the first chamber, wherein said elastomeric diaphragm (40a) is reciprocally movable in said housing in response to the delivery and exhaust of pressurised fluid to and from the first chamber (51).

12. A tandem brake actuator comprising a coupling connecting an emergency brake actuator and service brake actuator, said coupling being as claimed in any of claims 2 to 6 or any of claims 7, 8 and 9 as dependent on claim 2, said emergency brake actuator being as defined in sub-paragraphs a) to c) of claim 10 and said service brake actuator being as defined in sub-paragraphs a) to c) of claim 11.

## Patentansprüche

1. Kupplung für eine Bremsenbetätigungsvorrichtung, wobei die Kupplung folgendes umfasst:
a) ein eingeschlossenes Gehäuse mit einer Gehäuseschale (32/31) und einem Adapter (35), wobei die genannte Gehäuseschale ein offenes Ende aufweist, das eine im Wesentlichen vertikale zylindrische Wand (34) aufweist, wobei der genannte Adapter ein offenes ringförmiges Ende aufweist, das dem offenen Ende der genannten Gehäuseschale entspricht;
b) eine Eingriffsstruktur an dem offenen Ende des genannten Adapters, welche eine erste nach außen zeigende ringförmige Rippe (39) an dem äußersten peripheren Rand des genannten Adapters umfasst, sowie eine zweite nach außen zeigende ringförmige Rippe (36) in axialer Ausrichtung mit der genannten ersten Rippe und durch eine erste ringförmige Rille (61) von der genannten ersten Rippe getrennt, **gekennzeichnet durch** eine dritte nach außen zeigende ringförmige Rippe (37) in der genannten Eingriffsstruktur in axialer Ausrichtung mit der genannten zweiten ringförmigen Rippe (36) und getrennt von der genannten zweiten ringförmigen Rippe **durch** eine zweite ringförmige Rille (63);
c) ein ringförmiges Sicherungsstück (45), das in der genannten zweiten ringförmigen Rille bereitgestellt ist; und
d) mindestens eine Schweißung (49), welche das genannte ringförmige Sicherungsstück mit der zylindrischen Wand (34) der genannten Gehäuseschale (32/31) verbindet, um die genannte Gehäuseschale sicher an dem genannten Adapter (35) zu halten.

2. Kupplung nach Anspruch 1, wobei eine elastomere Membran (40/40a) über dem offenen Ende der ersten Rippe des genannten Adapters (35) bereitgestellt und über den genannten Adapter gestreckt ist, der den Innenraum der genannten Bremsenbetätigungsvorrichtung in eine erste Kammer (21/51) und eine zweite Kammer (26/54) teilt, wobei die genannte Membran eine vergrößerte ringförmige periphere Lippe (41/41a) aufweist, die sich im Eingriff mit der genannten ersten Rille (61) befindet.

3. Kupplung nach Anspruch 2, wobei die genannte zweite Rippe (36) von der genannten dritten Rippe (37) axial ausgespart ist, und wobei die genannte erste Rippe (39) von der genannten zweiten Rippe (36) axial ausgespart ist.

4. Kupplung nach Anspruch 3, wobei der Außendurchmesser der genannten zweiten Rippe (36) dem Innendurchmesser der genannten zylindrischen Gehäuseschalenwand (34) entspricht.

5. Kupplung nach Anspruch 2, wobei sich der genannte periphere Rand der genannten Membran (40/40a) angrenzend an der genannten Lippe (41) von der genannten ersten Rippe im Wesentlichen in einem vertikalen Winkel erstreckt, wenn die genannte Membran erweitert wird.

6. Kupplung nach Anspruch 5, wobei ein größerer Oberflächenbereich der genannten Membran (40/40a) für die Herstellung eines direkten Kontakts mit einer Druckausübungsplatte (23/53) in der genannten Betätigungsvorrichtung zur Verfügung steht.

7. Kupplung nach Anspruch 1 oder 2, wobei die genannte Gehäuseschale (32/31) aus Stahl besteht, wobei der genannte Adapter (35) aus Aluminium besteht, und wobei das genannte Sicherungsstück (45) aus einem Eisenwerkstoff besteht.

8. Kupplung nach Anspruch 1 oder 2, wobei das genannte Sicherungsstück (45) unterbrochen ist.

9. Kupplung nach Anspruch 1 oder 2, wobei das genannte Sicherungsstück (45) einen Querschnitt aufweist, der aus der Gruppe der Formen ausgewählt wird, die kreisförmig, halbkreisförmig, quadratisch, rechteckig, oval, L-förmig, hexagonal und achteckig umfasst.

10. Notbremsenbetätigungsvorrichtung für ein Fahrzeug mit einer Kupplung nach einem der Ansprüche 2 bis 6 oder 7, 8 und 9, die Unteransprüche von Anspruch 2 darstellen, wobei die Vorrichtung ferner folgendes umfasst:
a) ein bewegliches Plattenelement (23) in der ersten Kammer (21), das mit der Membran (40) beweglich ist;
b) eine Schaltstange (28) in der ersten Kammer, die zur Betätigung einer Bremse funktionsfähig dem genannten beweglichen Plattenelement zugeordnet ist; und
c) eine Druckfeder (29), die in der zweiten Kammer (26/54) an einer Position angeordnet ist, so dass die Membran an eine erste Position gedrückt wird, wobei die erste Kammer beim Auslassen von unter Druck stehendem Fluid aus der ersten Kammer kollabiert, wobei die genannte elastomere Membran (40) in dem genannten Gehäuse reziprok beweglich ist als Reaktion auf die Zufuhr von unter Druck stehendem Fluid an die erste Kammer (21) und auf das Auslassen von unter Druck stehendem Fluid aus der Kammer.

11. Betriebsbremsenbetätigungsvorrichtung für ein Fahrzeug mit einer Kupplung nach einem der Ansprüche 2 bis 6 oder 7, 8 und 9, die Unteransprüche von Anspruch 2 darstellen, wobei die Vorrichtung ferner folgendes umfasst:
a) ein bewegliches Plattenelement (53) in der ersten Kammer (51), das mit der Membran (40a) beweglich ist;
b) eine Schaltstange (25) in der ersten Kammer, die zur Betätigung einer Bremse funktionsfähig dem genannten beweglichen Plattenelement zugeordnet ist; und
c) eine Rückholfeder (29), die in der genannten ersten Kammer (51) an einer Position angeordnet ist, um die Membran (40a) an eine erste Position zu drücken, wobei die erste Kammer nach dem Auslassen von unter Druck stehendem Fluid aus der ersten Kammer kollabiert, wobei die genannte elastomere Membran (40a) in dem genannten Gehäuse reziprok beweglich ist als Reaktion auf die Zufuhr von unter Druck stehendem Fluid an die erste Kammer (51) und auf das Auslassen von unter Druck stehendem Fluid aus der Kammer.

12. Doppelbremsenbetätigungsvorrichtung, die eine Kupplung umfasst, welche eine Notbremsenbetätigungsvorrichtung und eine Betriebsbremsenbetätigungsvorrichtung miteinander koppelt, wobei die genannte Kupplung einem der Ansprüche 2 bis 6 oder 7, 8 und 9 entspricht , die Unteransprüche von Anspruch 2 darstellen, wobei die genannte Notbremsenbetätigungsvorrichtung den Definitionen in den Unterabschnitten a) bis c) aus Anspruch 10 entspricht, und wobei die genannte Betriebsbremsenbetätigungsvorrichtung den Definitionen in den Unterabschnitten a) bis c) aus Anspruch 11 entspricht.

## Revendications

1. Accouplement pour un dispositif d'actionnement de frein comportant :
a) un boîtier fermé comprenant un corps de boîtier (32, 31) et un adaptateur (35), ledit corps de boîtier ayant une extrémité ouverte qui comprend une paroi cylindrique sensiblement verticale (34), ledit adaptateur ayant une extrémité annulaire ouverte correspondant à l'extrémité ouverte dudit corps de boîtier;
b) une structure d'engagement sur l'extrémité ouverte dudit adaptateur comportant une première nervure annulaire orientée vers l'extérieur (39) au niveau du bord annulaire le plus à l'extérieur dudit adaptateur, une deuxième nervure annulaire orientée vers l'extérieur (36) en alignement axial avec ladite première nervure et séparée de ladite première nervure par une première rainure annulaire (61), **caractérisé par** une troisième nervure annulaire orientée vers l'extérieur (37) dans ladite structure d'engagement en alignement axial avec ladite deuxième nervure annulaire (36) et séparée de ladite deuxième nervure annulaire par une deuxième rainure annulaire (63);
c) une pièce de retenue annulaire (45) prévue dans ladite deuxième rainure annulaire; et
d) au moins une soudure (49) qui relie ladite pièce de retenue annulaire à la paroi cylindrique (34) dudit corps de boîtier (32, 31) afin de maintenir ledit corps de boîtier de façon sûre contre ledit adaptateur (35).

2. Accouplement selon la revendication 1, dans lequel un diaphragme en élastomère (40, 40a) est prévu sur l'extrémité ouverte de ladite première nervure dudit adaptateur (35) et tendu sur ledit adaptateur en divisant l'intérieur dudit dispositif d'actionnement de frein en une première chambre (21, 51) et une deuxième chambre (26, 54), ledit diaphragme ayant une lèvre périphérique annulaire agrandie (41, 41a) en engagement avec ladite première rainure (61).

3. Accouplement selon la revendication 2, dans lequel ladite deuxième nervure (36) est renfoncée axialement par rapport à ladite troisième nervure (37), et ladite première nervure (39) est renfoncée axialement par rapport à ladite deuxième nervure (36).

4. Accouplement selon la revendication 3, dans lequel le diamètre extérieur de ladite deuxième nervure (36) est le même que le diamètre intérieur de ladite paroi de corps de boîtier cylindrique (34).

5. Accouplement selon la revendication 2, dans laquelle le bord périphérique dudit diaphragme (40, 40a) adjacent à ladite lèvre (41) s'étend à l'écart de ladite première nervure avec un angle sensiblement vertical lorsque ledit diaphragme est dilaté.

6. Accouplement selon la revendication 5, dans lequel une surface accrue dudit diaphragme (40, 40a) est disponible afin de réaliser un contact direct avec une plaque d'application de pression (23, 53) à l'intérieur dudit dispositif d'actionnement.

7. Accouplement selon la revendication 1 ou la revendication 2, dans lequel ledit corps de boîtier (32, 31) est fabriqué en acier, ledit adaptateur (35) est fabriqué en aluminium, et ladite pièce de retenue (45) est fabriquée en métal ferreux.

8. Accouplement selon la revendication 1 ou la revendication 2, dans lequel ladite pièce de retenue (45) est discontinue.

9. Accouplement selon la revendication 1 ou la revendication 2, dans lequel ladite pièce de retenue (45) a une section choisie dans le groupe composé d'une forme circulaire, semi-circulaire, carrée, rectangulaire, ovale, en forme de L, hexagonale et octogonale.

10. Dispositif d'actionnement de frein d'urgence pour un véhicule comportant un accouplement selon l'une quelconque des revendications 2 à 6 ou l'une quelconque des revendications 7, 8 et 9 lorsqu'elles sont rattachées à la revendication 2, comportant en outre :
a) un élément de plaque mobile (23) dans la première chambre (21) mobile avec le diaphragme (40);
b) une tige de dispositif d'actionnement (28) dans la première chambre associée de manière opérationnelle avec ledit élément de plaque mobile pour l'actionnement d'un frein; et
c) un ressort de compression (29) disposé dans la deuxième chambre (26, 54) dans une position qui pousse le diaphragme vers une première position dans laquelle la première chambre est écrasée lors de l'échappement du fluide sous pression de la première chambre, ledit diaphragme en élastomère (40) étant mobile alternativement dans ledit boîtier en réponse à l'alimentation et l'échappement de fluide sous pression vers et depuis la première chambre (21).

11. Dispositif d'actionnement de frein de service pour un véhicule comportant un accouplement selon l'une quelconque des revendications 2 à 6 ou l'une quelconque des revendications 7, 8 et 9 lorsqu'elles sont rattachées à la revendication 2, comportant en outre :
a) un élément de plaque mobile (53) dans la première chambre (51) mobile avec le diaphragme (40a);
b) une tige de dispositif d'actionnement (25) dans la première chambre associée de manière opérationnelle au dit élément de plaque mobile pour l'actionnement d'un frein; et
c) un ressort de rappel (29) disposé dans la première chambre (51) dans une position qui pousse la diaphragme (40a) vers une première position dans laquelle la première chambre est écrasée lors de l'échappement de fluide sous pression de la première chambre, ledit diaphragme en élastomère (40a) étant mobile alternativement dans ledit boîtier en réponse à l'alimentation et l'échappement de fluide sous pression vers et depuis la première chambre (51).

12. Dispositif d'actionnement de frein en tandem comportant un accouplement qui relie un dispositif d'actionnement de frein d'urgence et un dispositif d'actionnement de frein de service, ledit accouplement étant selon l'une quelconque des revendications 2 à 6 ou l'une quelconque des revendications 7, 8 et 9 lorsqu'elles sont rattachées à la revendication 2, ledit dispositif d'actionnement de frein d'urgence étant tel que défini dans les paragraphes a) à c) de la revendication 10 et ledit dispositif d'actionnement de frein de service étant tel que défini dans les paragraphes a) à c) de la revendication 11.
